# EUROPEAN PATENT SPECIFICATION

(11) **EP 2 907 559 B1**
(45) Date of publication and mention of the grant of the patent: **06.06.2018**
(21) Application number: 15154646.2
(22) Date of filing: 11.02.2015
(51) Int. Cl.: B01D 21/34, B01D 21/00, C02F 11/12, B01D 21/24

(54) **Sludge conditioning apparatus**
Schlammkonditionierungsvorrichtung
Appareil de conditionnement de boues

(30) Priority: 12.02.2014 GB 201402429
(43) Date of publication of application: 19.08.2015
(73) Proprietor: CDE Global Limited, County Tyrone BT80 9DG (GB)
(72) Inventor: Convery, Anthony, Cookstown, County Tyrone BT80 9DG (GB); Vallely, Kevin, Cookstown, County Tyrone BT80 9DG (GB)
(74) Representative: FRKelly

(56) References cited:
- CA-A1- 2 860 182
- IL-A- 43 598
- US-B1- 7 727 389

## Description

This invention relates to a sludge conditioning apparatus of a waste water recycling system.

Waste water streams containing entrained solid impurities and contaminants in suspension are produced from numerous quarrying, mining, chemical or industrial processes. It is often desirable to reuse such water, particularly in regions prone to water shortages.

Before the waste water can be re-used, the impurities and contaminants must be removed from the water. This is typically done by passing the water into a settling tank wherein the fines are able to settle out under the action of gravity, typically after adding a flocculating agent to which the fines bind to bring them out of suspension.

The collected concentrated solids are removed from the lower region of the settling tank for subsequent dewatering and disposal. The cleaned or clarified water is removed from an upper region of the settling tank to be re-used, typically after passing over a weir in the upper region of the tank.

Once removed from the lower region of the settling tank, the sludge may be pumped or conveyed to a filter press or centrifuge for final dewatering or to ponds for storage/disposal. Typically the sludge is pumped from the bottom of the settling tank via a suitable pump. It is desirable for the sludge to be removed from the tank at a rate substantially equal to the rate of collection of the sludge in the bottom of the settling tank such that the sludge has a consistent density to ensure efficient and reliable operation of the pump and to suit the requirements of subsequent processes.

The rate of removal of the sludge may be adjusted as a function of the torque required to stir the sludge within the bottom of the settling tank via rotary rake systems, used to displace the sludge towards the centre of the typically conical settling tank, the torque being indicative of the slurry density. However, in known systems, the control of the density of the sludge has been unreliable and problematic, leading to inconsistent sludge properties downstream of the settling tank, reducing the efficiency of the next process. CA2860182, IL43598 and US7727389 are examples of relevant background prior art.

According to the present invention there is provided a sludge conditioning apparatus comprising at least one hopper for receiving waste water having solid impurities entrained therein, wherein the solid impurities settle out of suspension to be collected in a lower region of the hopper as sludge, the hopper having a sludge outlet at a lower end thereof communicating with a pump for removing sludge therefrom, sensing means being provided for determining the amount of sludge collected in the hopper, the rate at which the sludge is removed by the pump being controlled by a control device, the control device controlling the operation of the pump to control the rate of removal of the sludge as a function of the output of the sensing means, said sensing means determining the weight of sludge collected in the hopper, wherein the hopper comprises an upper section and a lower section supported by the upper section, the sensing means comprising one or more load cells acting between the upper and lower sections of the hopper for determining the load applied to the upper section by the lower section, the lower section of the hopper being suspended from the upper section thereof and wherein the upper and lower sections of the hopper is linked by a flexible linking section.

Preferably the flexible linking section is formed from a resilient or elastic material.

The pump may be mounted beneath the hopper.

Preferably the sludge outlet of the hopper communicates with the pump via a flexible or telescopic conduit permitting vertical displacement of the lower region of the hopper with respect to the pump.

At least the lower region of the hopper may comprise a conical body.

The control means may be programmed to adjust the operation of the pump to maintain the amount of sludge collected in the hopper between predetermined limits.

In one embodiment the sludge conditioning apparatus comprises a plurality of said hoppers arranged in series within an elongate housing, each hopper having a sludge outlet at a lower end thereof communicating with a separate pump for removing sludge therefrom, the pump being controlled by a control device in response to the output of a sensing means for determining the amount of sludge collected in the lower region of the respective hopper, wherein the control device controls the operation of the pump to control the rate of removal of the sludge from the respective hopper as a function of the output of the sensing means.

Each hopper may be located in a lower section of the elongate housing, each hopper extending from a settling tank located in an upper section of said elongate housing such that the hoppers define a lower region of the settling tank. Preferably a waste water inlet is provided at a first end of said elongate housing delivering waste water in the settling tank, a clean water outlet being provided at a second end of the elongate housing, opposite said first end, for removing clean water from an upper region of the settling tank. The clean water outlet may be separated from the remainder of the settling tank via a weir over which clean water may flow to pass into the clean water outlet.

Preferably the upper and lower sections of the elongate housing are separable from one another. The hoppers may be adapted to be raised up into the upper section of the elongate housing for transportation.

Preferably the dimensions of the upper and lower sections of the elongate housing correspond to those of a standard shipping container.

A sludge conditioning apparatus in accordance with an embodiment of the present invention will now be described, by way of example only, with reference to the accompanying drawings, in which :-
Figure 1 is a perspective view of a sludge conditioning apparatus in accordance with an embodiment of the present invention;
Figures 2 and 3 are detailed perspective views of the settling tank of the apparatus of Figure 1;

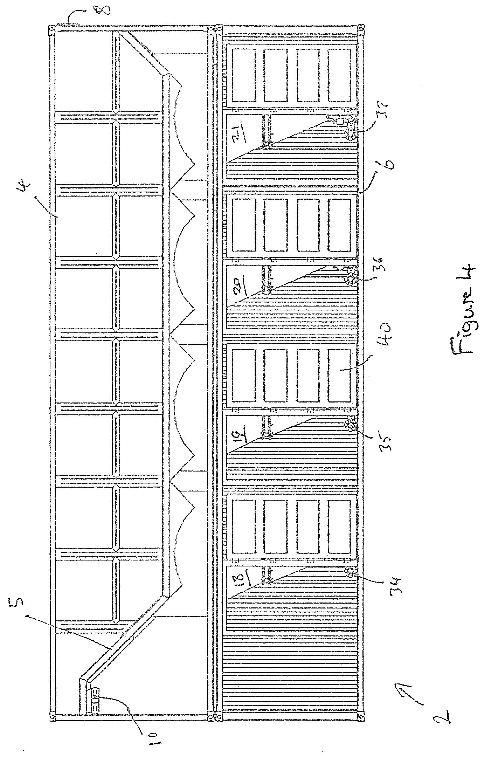

Figure 4 is a side view of the sludge conditioning apparatus of Figure 1;

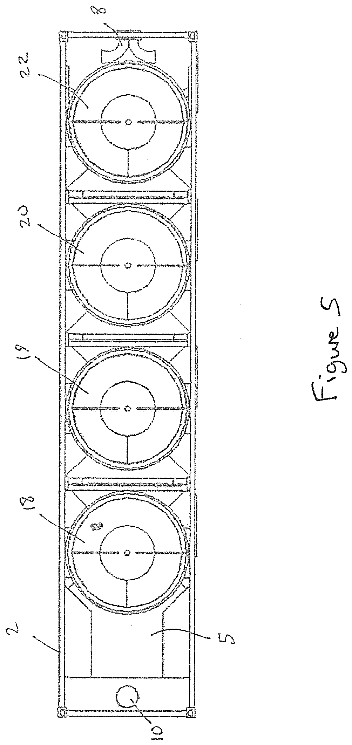

Figure 5 is a plan view of the sludge conditioning apparatus of Figure 1;

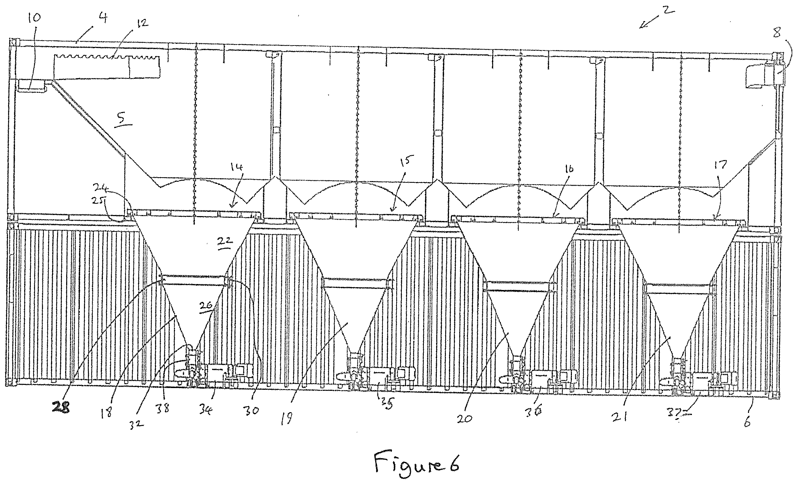

Figure 6 is a longitudinal sectional view of the sludge conditioning apparatus of Figure 1; and
Figure 7 is a longitudinal sectional view of the sludge conditioning apparatus of Figure with the hoppers in a raised position.

A sludge conditioning apparatus in accordance with an embodiment of the present invention, as is illustrated in the drawings, comprising an elongate housing 2 formed from separable upper and lower sections 4,6 stacked upon one another. Preferably each of said upper and lower sections 4,6 comprising a right-angled parallelepiped having the dimensions of a standard shipping container to facilitate transportation of each section.

The upper section 4 of the housing 2 contains an open topped settling tank 5 having a waste water inlet 8 at a first end and a clean water outlet 10 at a second end, opposite the first end. The clean water outlet 10 is separated from the remainder of the settling tank 5 via a weir 12 located in an upper region of the settling tank 5, whereby only water adjacent the uppermost region of the settling tank 5 can pass into the clean water outlet 10.

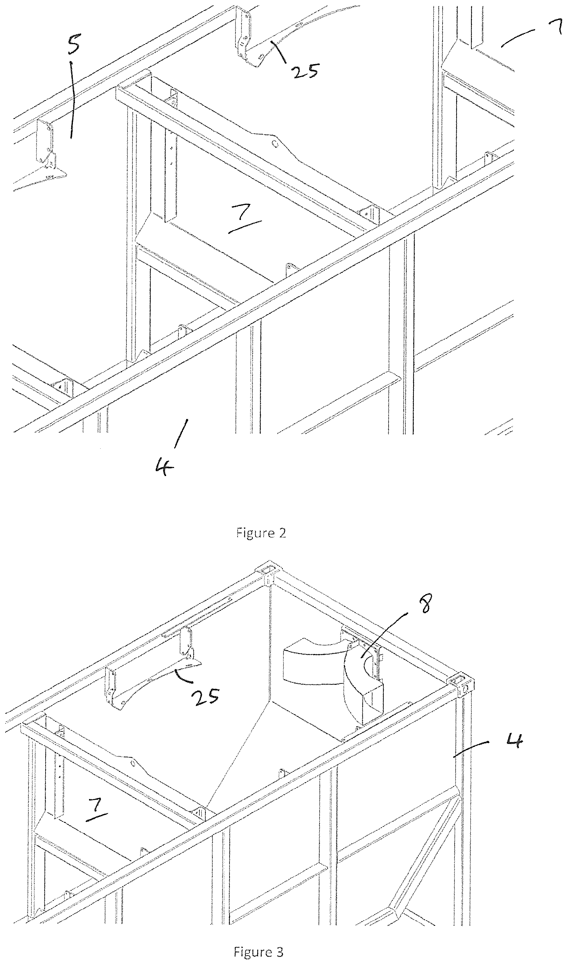

The settling tank 5 is divided into four sections separated by baffle plates 7 extending between the sides of the upper section 4 adjacent an upper region of the settling tank 5, such that waste water passing between the sections of the settling tank 5 must pass beneath the baffle plates, preventing waste water from passing directly from the waste water inlet 8 to the clean water outlet 10. The baffle plates 7 are best shown in Figures 2 and 3. The height of each baffle plate 7 may be adjusted, as desired.

A circular opening 14,15,16,17 are provided in the base of each section of the settling tank 5. A respective conical sludge collection hopper 18,19,20,21 is located within each of the circular openings 14,15,16,17 to depend therefrom to extend into the lower section 6 of the elongate housing 2.

Each sludge collection hopper 18,19,20,21 has an upper hopper section 22, having an upper peripheral flange 24 mounted on a locating flange 25 of the respective circular opening 14,15,16,17 in the base of the settling tank 5, and a lower hopper section 26 suspended from the upper hopper section 22 via a flexible connecting section 28. The flexible connecting section 28 is formed from an elastic or resilient material, such as rubber.

One or more load cells 30 are connected between the upper and lower hopper sections 22,26 of each hopper 18,19,20,21 for determining the load applied to the upper hopper section 22 by the lower hopper section 26 suspended therefrom.

A sludge outlet 32 is provided at the base of each hopper 18,19,20,21, each sludge outlet 32 being coupled to a respective pump 34,35,36,37 via a flexible or telescopic coupling pipe 38 for removing sludge from the hoppers and passing the sludge to a subsequent process, such as a dewatering centrifuge or filter press.

The load cells 30 are connected to a pump controller, whereby the operation of the pumps 34,35,36,37 can be controlled in response to the load measured by the load cells 30, as will be described in more detail below.

In use, waste water passes into the settling tank 5 via the waste water inlet 8. The waste water will be typically treated with a flocculant before passing into the settling tank 5. The fines bind to the flocculant, bringing them out of suspension, as is known in the art. The fines then settle out under the action of gravity and collect in the lower region of each hopper as sludge.

As the sludge builds up within the lower region of each hopper, the load applied to the respective upper hopper section 22 via the lower hopper section 26 increases and this increase in load is measured by the load cells 30. Thus the load cells 30 can be used to provide an accurate measure of the amount of sludge collected within each hopper.

It is desirable to maintain the sludge level in each hopper substantially constant so that the sludge density at the outlet of each hopper remains constant to ensure efficient operation of the pump and to provide optimum sludge conditions for a subsequent process. To achieve this, the load measured by the load cells 30 of each hopper 18,19,20,21 can be used to control the operation of the associated pump 34,35,36,37 so that the rate of removal of the sludge by the pump is substantially equal to the rate of build up of sludge within the hopper, maintaining the level of sludge within each hopper within predetermined limits.

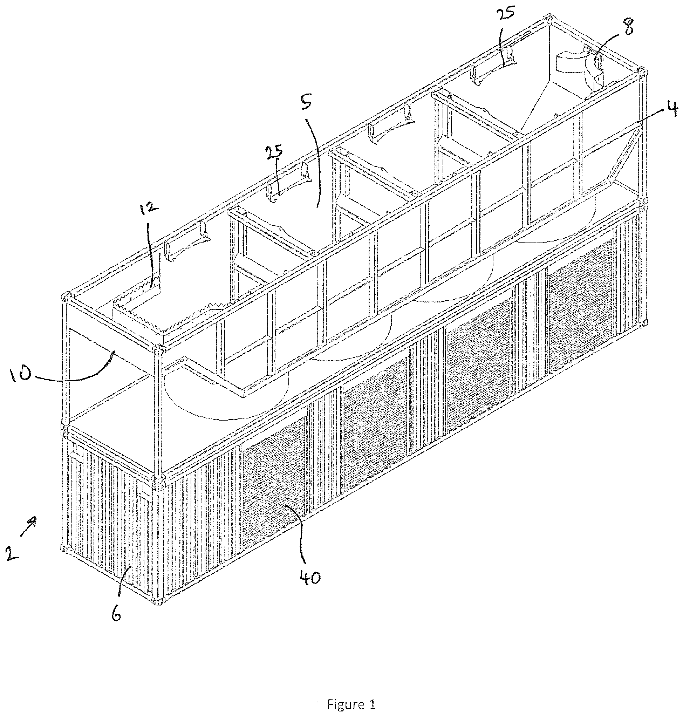

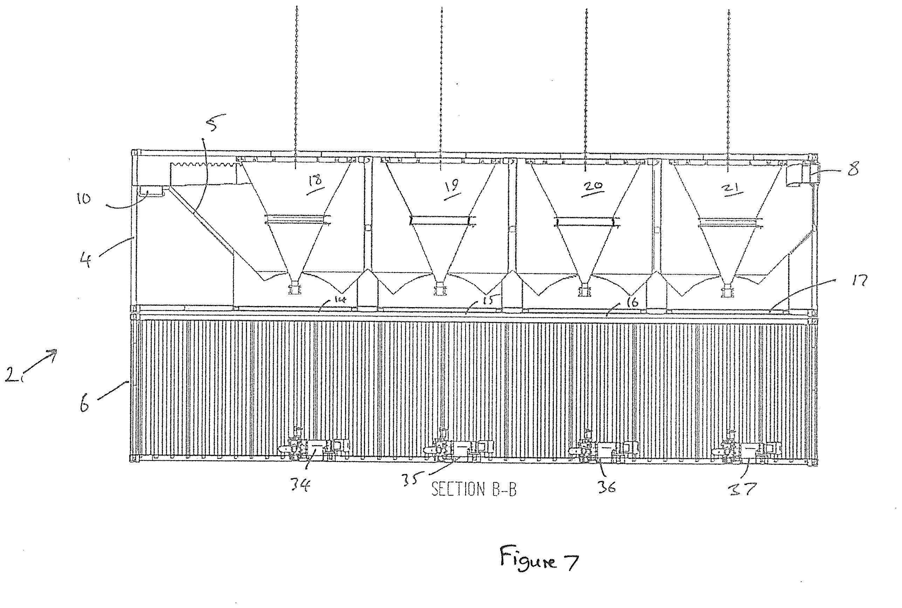

As illustrated in Figure 7, when it is desired to separate the upper and lower sections 4,6 of the elongate housing 2 of the apparatus for transportation, each hopper 18,19,20,21 can be disconnected from its respective pump 34,35,36,37, the hopper flanges 24 being releases from the respective openings 14,15,16,17 of the settling tank 5, and the hoppers 18,19,20,21 can be raised up into the upper section 4 of the elongate housing 2. The upper section 4 of the housing 2 may incorporate lifting means for raising the hoppers and connection flanges (25, Figures 1 to 3) for securing the hoppers 18,19,20,21 within the upper section 4

The lower section 6 of the elongate housing 2 is preferably provided with access doors 40 to permit access to the pumps and pump controller and to the hoppers to facilitate maintenance of the pumps and hoppers and to enable the hoppers to be disconnected and reconnected to the pumps and to the openings in the base of the upper section.

## Claims

1. A sludge conditioning apparatus comprising at least one hopper (18,19,20,21) for receiving waste water having solid impurities entrained therein, wherein the solid impurities settle out of suspension to be collected in a lower region of the hopper as sludge, the hopper having a sludge outlet (32) at a lower end thereof communicating with a pump (34,35,36,37) for removing sludge therefrom, sensing means (30) being provided for determining the amount of sludge collected in the hopper, the rate at which the sludge is removed by the pump being controlled by a control device, the control device controlling the operation of the pump to control the rate of removal of the sludge as a function of the output of the sensing means, said sensing means determining the weight of sludge collected in the hopper, wherein the hopper comprises an upper section (22) and a lower section (26) supported by the upper section (22), the sensing means comprising one or more load cells (30) acting between the upper and lower sections (22,26) of the hopper for determining the load applied to the upper section (22) by the lower section (26), the lower section (26) of the hopper being suspended from the upper section (22) thereof, **characterised in that** said upper and lower sections (22,26) of the hopper (18,19,20,21) are linked by a flexible linking section (28).

2. A sludge conditioning apparatus as claimed in claim 1, wherein said flexible linking section (28) is formed from a resilient or elastic material.

3. A sludge conditioning apparatus as claimed in any preceding claim wherein the pump (34,35,36,37) is mounted beneath the hopper (18,19,20,21).

4. A sludge conditioning apparatus as claimed in claim 3, wherein the sludge outlet (32) of the hopper communicates with the pump (34,35,36,37) via a flexible or telescopic conduit (38) permitting vertical displacement of the lower section (26) of the hopper with respect to the pump (34,35,36,37).

5. A sludge conditioning apparatus as claimed in any preceding claim, wherein at least the lower section (26) of the hopper (18,19,20,21) comprises a conical body.

6. A sludge conditioning apparatus as claimed in any preceding claim, wherein the control means is programmed to adjust the operation of the pump (34,35,36,37) to maintain the amount of sludge collected in the hopper between predetermined limits.

7. A sludge conditioning apparatus as claimed in any preceding claim comprising a plurality of said hoppers (18,19,20,21) arranged in series within an elongate housing (2), each hopper (18,19,20,21) having a sludge outlet (32) at a lower end thereof communicating with a separate pump (34,35,36,37) for removing sludge therefrom, each pump being controlled by a control device in response to the output of a respective sensing means for determining the amount of sludge collected in the lower region of the respective hopper, wherein the control device controls the operation of the pump to control the rate of removal of the sludge from the respective hopper as a function of the output of the sensing means.

8. A sludge conditioning apparatus as claimed in claim 7, wherein each hopper (18,19,20,21) is located in a lower section (6) of the elongate housing (2), each hopper extending from a settling tank located in an upper section (4) of said elongate housing (2) such that the hoppers define a lower region of the settling tank.

9. A sludge conditioning apparatus as claimed in claim 8, wherein a waste water inlet (8) is provided at a first end of said elongate housing (2) delivering waste water in the settling tank, a clean water outlet (10) being provided at a second end of the elongate housing (2), opposite said first end, for removing clean water from an upper region of the settling tank.

10. A sludge conditioning apparatus as claimed in claim 9, wherein said clean water outlet (10) is separated from the remainder of the settling tank via a weir (12) over which clean water may flow to pass into the clean water outlet (10).

11. A sludge conditioning apparatus as claimed in any of claims 8 to 10, wherein the upper and lower sections (4,6) of the elongate housing (2) are separable from one another.

12. A sludge conditioning apparatus as claimed in claim 11, wherein the hoppers (18,19,20,21) are adapted to be raised up into the upper section of the elongate housing (2) for transportation.

13. A sludge conditioning apparatus as claimed in claim 11 or claim 12, wherein the dimensions of the upper and lower sections (4,6) of the elongate housing (2) correspond to those of a standard shipping container.

## Patentansprüche

1. Schlammaufbereitungsvorrichtung, umfassend mindestens einen Trichter (18, 19, 20, 21) zum Aufnehmen von Abwasser mit darin mitgeführten Feststoffverunreinigungen, wobei sich die Feststoffverunreinigungen aus einer Suspension absetzen, um in einem unteren Bereich des Trichters als Schlamm gesammelt zu werden, wobei der Trichter einen Schlammauslass (32) an einem unteren Ende desselben aufweist, der mit einer Pumpe (34, 35, 36, 37) in Verbindung steht, um Schlamm daraus abzuführen, wobei Messmittel (30) bereitgestellt sind, um die Menge des in dem Trichter gesammelten Schlamms zu bestimmen, wobei die Geschwindigkeit, mit der der Schlamm von der Pumpe abgeführt wird, von einer Steuerungsvorrichtung gesteuert wird, wobei die Steuerungsvorrichtung den Betrieb der Pumpe steuert, um die Abführgeschwindigkeit des Schlamms als Funktion des Ausgangs des Messmittels zu steuern, wobei das Messmittel das Gewicht des in dem Trichter gesammelten Schlamms bestimmt, wobei der Trichter einen oberen Abschnitt (22) und einen von dem oberen Abschnitt (22) getragenen unteren Abschnitt (26) umfasst, wobei das Messmittel eine oder mehrere Kraftmessdosen (30) umfasst, die zwischen dem oberen und dem unteren Abschnitt (22, 26) des Trichters wirken, um die von dem unteren Abschnitt (26) auf den oberen Abschnitt (22) ausgeübte Belastung zu bestimmen, wobei der untere Abschnitt (26) des Trichters an dem oberen Abschnitt (22) desselben aufgehängt ist, **dadurch gekennzeichnet, dass** der obere und der untere Abschnitt (22, 26) des Trichters (18, 19, 20, 21) durch einen biegsamen Verbindungsabschnitt (28) verbunden sind.

2. Schlammaufbereitungsvorrichtung nach Anspruch 1, wobei der biegsame Verbindungsabschnitt (28) aus einem nachgiebigen oder elastischen Material gebildet ist.

3. Schlammaufbereitungsvorrichtung nach einem der vorangehenden Ansprüche, wobei die Pumpe (34, 35, 36, 37) unter dem Trichter (18, 19, 20, 21) angebracht ist.

4. Schlammaufbereitungsvorrichtung nach Anspruch 3, wobei der Schlammauslass (32) des Trichters über eine biegsame oder teleskopische Leitung (38), die die vertikale Verschiebung des unteren Abschnitts (26) des Trichters in Bezug auf die Pumpe (34, 35, 36, 37) zulässt, mit der Pumpe (34, 35, 36, 37) in Verbindung steht.

5. Schlammaufbereitungsvorrichtung nach einem der vorangehenden Ansprüche, wobei mindestens der untere Abschnitt (26) des Trichters (18, 19, 20, 21) einen konischen Körper umfasst.

6. Schlammaufbereitungsvorrichtung nach einem der vorangehenden Ansprüche, wobei das Steuerungsmittel dazu programmiert ist, den Betrieb der Pumpe (34, 35, 36, 37) einzustellen, um die Menge des in dem Trichter gesammelten Schlamms zwischen vorbestimmten Grenzen zu halten.

7. Schlammaufbereitungsvorrichtung nach einem der vorangehenden Ansprüche, umfassend eine Vielzahl der Trichter (18, 19, 20, 21), die in einem langgestreckten Gehäuse (2) in Reihe angeordnet sind, wobei jeder Trichter (18, 19, 20, 21) einen mit einer eigenen Pumpe (34, 35, 36, 37) in Verbindung stehenden Schlammauslass (32) an einem unteren Ende desselben aufweist, um Schlamm daraus abzuführen, wobei jede Pumpe als Reaktion auf den Ausgang eines jeweiligen Messmittels zum Bestimmen der Menge des in dem unteren Bereich des jeweiligen Trichters gesammelten Schlamms von einer Steuerungsvorrichtung gesteuert wird, wobei die Steuerungsvorrichtung den Betrieb der Pumpe steuert, um die Abführgeschwindigkeit des Schlamms aus dem jeweiligen Trichter als Funktion des Ausgangs des Messmittels zu steuern.

8. Schlammaufbereitungsvorrichtung nach Anspruch 7, wobei sich jeder Trichter (18, 19, 20, 21) in einem unteren Abschnitt (6) des langgestreckten Gehäuses (2) befindet, wobei sich jeder Trichter von einem in einem oberen Abschnitt (4) des langgestreckten Gehäuses (2) befindlichen Absetzbehälter erstreckt, sodass die Trichter einen unteren Bereich des Absetzbehälters definieren.

9. Schlammaufbereitungsvorrichtung nach Anspruch 8, wobei an einem ersten Ende des langgestreckten Gehäuses (2) ein Abwassereinlass (8) bereitgestellt ist, der Abwasser in den Absetzbehälter zuführt, wobei ein Reinwasserauslass (10) an einem dem ersten Ende gegenüberliegenden zweiten Ende des langgestreckten Gehäuses (2) bereitgestellt ist, um reines Wasser aus einem oberen Bereich des Absetzbehälters abzuführen.

10. Schlammaufbereitungsvorrichtung nach Anspruch 9, wobei der Reinwasserauslass (10) über ein Wehr (12), über das reines Wasser fließen kann, um in den Reinwasserauslass (10) zu gelangen, vom Rest des Absetzbehälters getrennt ist.

11. Schlammaufbereitungsvorrichtung nach einem der Ansprüche 8 bis 10, wobei der obere und der untere Abschnitt (4, 6) des langgestreckten Gehäuses (2) voneinander getrennt werden können.

12. Schlammaufbereitungsvorrichtung nach Anspruch 11, wobei die Trichter (18, 19, 20, 21) dazu angepasst sind, zum Transport in den oberen Abschnitt des langgestreckten Gehäuses (2) angehoben zu werden.

13. Schlammaufbereitungsvorrichtung nach Anspruch 11 oder Anspruch 12, wobei die Abmessungen des oberen und des unteren Abschnitts (4, 6) des langgestreckten Gehäuses (2) denjenigen eines Norm-Transportcontainers entsprechen.

## Revendications

1. Appareil de conditionnement des boues comportant au moins une trémie (18, 19, 20, 21) servant à recevoir des eaux usées ayant des impuretés solides entraînées dans celles-ci, dans lequel les impuretés solides se décantent par rapport à leur état de suspension à des fins de collecte dans une région inférieure de la trémie sous forme de boues, la trémie ayant une sortie pour boues (32) au niveau d'une extrémité inférieure de celle-ci en communication avec une pompe (34, 35, 36, 37) à des fins de retrait des boues en provenance de celle-ci, un moyen de détection (30) étant mis en oeuvre pour déterminer la quantité de boues ayant été collectées dans la trémie, la vitesse à laquelle les boues sont retirées par la pompe étant régulée par un dispositif de régulation, le dispositif de régulation servant à réguler le fonctionnement de la pompe pour réguler la vitesse de retrait des boues en fonction de la sortie du moyen de détection, ledit moyen de détection servant à déterminer le poids des boues ayant été collectées dans la trémie, dans lequel la trémie comporte une section supérieure (22) et une section inférieure (26) supportée par la section supérieure (22), le moyen de détection comportant une ou plusieurs cellules de pesage (30) agissant entre les sections supérieure et inférieure (22, 26) de la trémie pour déterminer la charge appliquée au niveau de la section supérieure (22) par la section inférieure (26), la section inférieure (26) de la trémie étant suspendue en provenance de la section supérieure (22) de celle-ci, **caractérisé en ce que** lesdites sections supérieure et inférieure (22, 26) de la trémie (18, 19, 20, 21) sont reliées par une section de liaison flexible (28).

2. Appareil de conditionnement des boues selon la revendication 1, dans lequel ladite section de liaison flexible (28) est formée à partir d'un matériau souple ou élastique.

3. Appareil de conditionnement des boues selon l'une quelconque des revendications précédentes, dans lequel la pompe (34, 35, 36, 37) est montée sous la trémie (18, 19, 20, 21).

4. Appareil de conditionnement des boues selon la revendication 3, dans lequel la sortie pour boues (32) de la trémie est en communication avec la pompe (34, 35, 36, 37) par le biais d'un conduit flexible ou télescopique (38) qui permet un déplacement vertical de la section inférieure (26) de la trémie par rapport à la pompe (34, 35, 36, 37).

5. Appareil de conditionnement des boues selon l'une quelconque des revendications précédentes, dans lequel au moins la section inférieure (26) de la trémie (18, 19, 20, 21) comporte un corps conique.

6. Appareil de conditionnement des boues selon l'une quelconque des revendications précédentes, dans lequel le moyen de régulation est programmé pour ajuster le fonctionnement de la pompe (34, 35, 36, 37) pour maintenir la quantité de boues ayant été collectées dans la trémie entre des limites prédéterminées.

7. Appareil de conditionnement des boues selon l'une quelconque des revendications précédentes, comportant une pluralité desdites trémies (18, 19, 20, 21) agencées en série dans les limites d'un logement allongé (2), chaque trémie (18, 19, 20, 21) ayant une sortie pour boues (32) au niveau d'une extrémité inférieure de celle-ci en communication avec une pompe séparée (34, 35, 36, 37) à des fins de retrait des boues en provenance de celle-ci, chaque pompe étant régulée par un dispositif de régulation en réponse à la sortie d'un moyen de détection respectif pour déterminer la quantité de boues ayant été collectées dans la région inférieure de la trémie respective, dans lequel le dispositif de régulation régule le fonctionnement de la pompe pour réguler la vitesse de retrait des boues en provenance de la trémie respective en fonction de la sortie du moyen de détection.

8. Appareil de conditionnement des boues selon la revendication 7, dans lequel chaque trémie (18, 19, 20, 21) est située dans une section inférieure (6) du logement allongé (2), chaque trémie s'étendant depuis un réservoir de décantation situé dans une section supérieure (4) dudit logement allongé (2) de telle sorte que les trémies définissent une région inférieure du réservoir de décantation.

9. Appareil de conditionnement des boues selon la revendication 8, dans lequel une entrée pour eaux usées (8) est mise en oeuvre au niveau d'une première extrémité dudit logement allongé (2) servant à acheminer les eaux usées dans le réservoir de décantation, une sortie pour eaux propres (10) étant mise en oeuvre au niveau d'une deuxième extrémité du logement allongé (2), à l'opposé de ladite première extrémité, à des fins de retrait des eaux propres en provenance d'une région supérieure du réservoir de décantation.

10. Appareil de conditionnement des boues selon la revendication 9, dans lequel ladite sortie pour eaux propres (10) est séparée du reste du réservoir de décantation par le biais d'un déversoir (12) sur lequel les eaux propres peuvent s'écouler pour passer jusque dans la sortie pour eaux propres (10).

11. Appareil de conditionnement des boues selon l'une quelconque des revendications 8 à 10, dans lequel les sections supérieure et inférieure (4, 6) du logement allongé (2) sont séparables l'une par rapport à l'autre.

12. Appareil de conditionnement des boues selon la revendication 11, dans lequel les trémies (18, 19, 20, 21) sont adaptées pour être soulevées jusque dans la section supérieure du logement allongé (2) à des fins de transport.

13. Appareil de conditionnement des boues selon la revendication 11 ou la revendication 12, dans lequel les dimensions des sections supérieure et inférieure (4, 6) du logement allongé (2) correspondent à celles d'un conteneur d'expédition normalisé.
